# EUROPEAN PATENT SPECIFICATION

(11) **EP 0 591 586 B1**
(45) Date of publication and mention of the grant of the patent: **26.03.1997**
(21) Application number: 92311844.2
(22) Date of filing: 29.12.1992
(51) Int. Cl.: F16J 15/34

(54) **Seal for a rotating member**
Dichtung für rotierende Teile
Joint d'étanchéité pour pièces rotatives

(30) Priority: 03.09.1992 JP 62097/92
(43) Date of publication of application: 13.04.1994
(73) Proprietor: NIPPON PILLAR PACKING CO., LTD., Osaka-shi, Osaka 532 (JP)
(72) Inventor: Fuse, Toshihiko c/o Nippon Pillar Packing Co, Ltd, Sanda-shi Hyogo-ken (JP)
(74) Representative: Daley, Michael John

(56) References cited:
- EP-A- 0 469 379
- EP-A- 0 470 409
- EP-A- 0 499 370
- DE-A- 3 901 362

## Description

This invention relates to a mechanical sealing assembly used normally to seal the space around a shaft in rotating equipment. The transmission of gas (nitrogen, argon, hydrogen, natural gas, air, etc.) of, for example in turbines, blowers, and centrifugal compressors needs to be prevented.

A conventional non-contact type mechanical seal of this type comprises a rotary sealing ring fixed to a rotating shaft which is surrounded by a seal case, a holding or supporting ring attached to the seal case so as to be movable in the axial direction but free from radial displacement, a stationary, i.e. non-rotating sealing ring shrink-fitted to the holding ring and located in the sealing passage by means such as inserted springs which are mounted between the seal case and the holding ring to press the stationary sealing ring against the rotating sealing ring. Such means seal a high-pressure fluid zone and a low-pressure fluid zone (atmospheric zone) at a fluid film forming section by maintaining the portion between sealed end faces opposite to both sealing rings in the non-contact condition with a fluid film located in between by generating dynamic pressure with a dynamic pressure generating groove provided on a rotating side sealed end face.

In the conventional seal the rotary sealing ring, stationary sealing ring, and holding ring are constructed with dissimilar materials with varying thermal expansion coefficients and Young's moduli. For example, the rotary sealing ring is made from extra hard material such as WC, SiC, etc., the stationary sealing ring from comparatively soft materials such as carbon, etc., and the holding ring from metallic materials such as SUS304, Ti, etc. The rotary sealing ring, stationary sealing ring, and holding ring, thermal and pressure strains are generated by heat generated by operation or system pressure of the equipment. These strains vary depending on the difference of component materials. In particular, the strain rate of the holding ring is extremely large due to the component materials.

Consequently, as described above, in the conventional seal in which the stationary sealing ring is fitted and integrated into the holding ring, the strains interact each other at the portion in which the stationary sealing ring comes in contact with the holding ring. Therefore, the stationary sealing ring is strongly subjected to the strain of the holding ring and exhibits a strain condition completely different from the strain of its own. Moreover, the stationary sealing ring is radially located in the seal case primarily by an elastic O-ring located between the seal case and the holding ring. This results in serious instability and the possibility of displacement of the stationary sealing ring in the radial direction by pressure fluctuation.

These factors impair smoothness of the stationary side sealing end face as well as concentricity and parallelism in relation to the rotating side sealing end face in conventional seals, resulting in non-uniformity of dynamic pressure generated between sealed end faces, and in an extreme case, giving rise to contingencies such as defective generation of dynamic pressure or localised contact of sealed end faces, and raising problems that conventional seals cannot exhibit good sealing capabilities over a long period of time.

The present invention provides a non-contact type mechanical seal which can properly maintain smoothness of the sealing end face at the stationary sealing ring as well as concentricity and parallelism to the rotary side sealing end face and exhibit satisfactory sealing capabilities over a long period of time even under high-pressure high-speed conditions.

DE-A-3901362 in Figure 5 shows a sealing assembly between a rotary shaft and the surrounding casing comprising a rotary sealing ring (15) fixed to the shaft and a stationary sealing ring (13) resiliently biassed against ring 15 by a locating ring.

In accordance with the present invention there is provided a sealing assembly between a rotary shaft and a surrounding casing, such assembly comprising a rotary sealing ring fixed to the shaft and a stationary sealing ring resiliently biassed against the rotary sealing ring by a locating ring and fitted between the casing and the shaft so as to allow axial movement and fluid passage characterised in that the stationary ring and the locating ring are held in spaced sealing relationship by an 0-ring, and in that the stationary ring is substantially free of radial displacement.

In one preferred embodiment, the outer peripheral surface of the stationary sealing ring is fitted to the inner peripheral surface of the cylindrical guide formed on the seal case or the inner peripheral surface of the stationary sealing ring is fitted to the outer peripheral surface of the cylindrical guide formed in the seal case, and between the fitted surfaces an extremely small clearance is formed to permit the axial movement of the ring and to allow fluid to pass, but to prevent radial displacement of the stationary sealing ring. More specifically, it is desirable to keep the difference between the outside diameter of the stationary sealing ring and inside diameter of the guide section for the former case and the difference between the inside diameter of the stationary sealing ring and the outside diameter of the guide section to 10 - 100 µm. In a preferred embodiment, an annular dovetail groove is formed on the end face in the holding ring opposite to the stationary sealing ring and to this annular groove an 0-ring is fitted and held slightly extruded toward the stationary sealing ring.

In the seal of the invention the stationary sealing ring and the holding ring are held strongly pressed by springs and fluid pressure. The pressing force is applied through the elastic material, 0-ring, not through direct contact between the two rings. Consequently, because in the pressed section of both rings, strain of each ring is absorbed by the 0-ring and does not interfere with the strain of the counterpart ring, the strain distribution of the stationary sealing ring is not affected by the strain of the holding ring even if the thermal strain rate and pressure strain rate of both rings may differ. Moreover, because the stationary sealing ring is held directly to the seal case without mediation of the holding ring or 0-ring, the concentricity and parallelism to the rotary sealing ring can be constantly and properly maintained. Consequently, smoothness of the stationary side sealed end face as well as concentricity and parallelism between the stationary side and the rotary side sealed end faces are not impaired and satisfactory sealing capabilities can be exhibited even under high pressure and high speed conditions.

The gap between the stationary sealing ring and the holding ring is satisfactorily sealed by the 0-ring. Because the pressing force by springs is given from the holding ring to the stationary sealing ring via the 0-ring, the pressing force of the stationary sealing ring to the rotary sealing ring is properly maintained and has no detrimental effects on the sealing capabilities. In addition, the use of a dovetail groove for the annular groove to hold the 0-ring eliminates any risk of the 0-ring being detached from the annular groove when equipment is assembled, or vibration is generated during operation, or pressure fluctuates.

The invention will now be described by way of example and with reference to the accompanying drawings wherein:-
Figure 1 is a cut-away view showing one embodiment of a non-contact type mechanical seal related to this invention;
Figure 2 is a detailed drawing showing an enlarged view of the principal portion of Figure 1, and
Figure 3 is a cut-away view showing a variation of Figure 1;

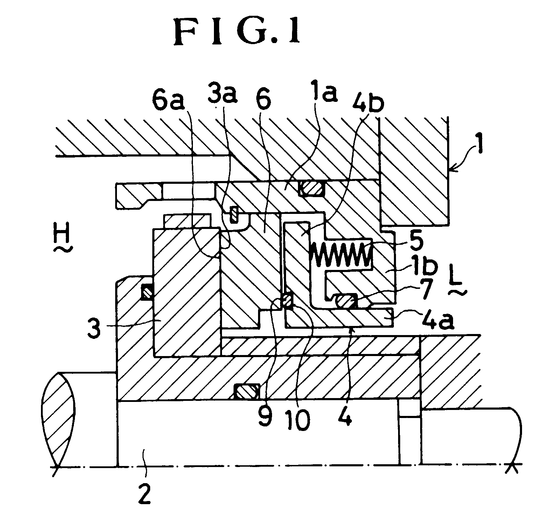

The non-contact type mechanical seal of this embodiment, as shown in Figure 1, comprises a rotary sealing ring 3 fixed to a rotating shaft 2 such as turbine shaft, etc., which passes through a seal casing 1, a locating or holding ring 4 secured to the seal case 1, a plurality of springs 5 located between the seal casing 1 and the holding ring 4, and a stationary, i.e. non-rotating sealing ring 6 arranged opposite to the rotary sealing ring 3.

The seal case 1, as shown in Figure 1, has a cylindrical guide 1a and an annular retainer 1b. The rotating shaft 2 passes concentrically through the guide 1a and retainer 1b.

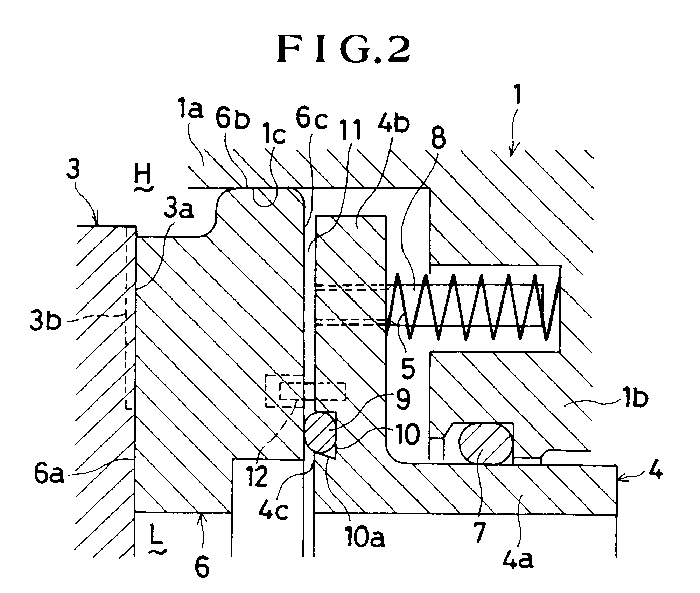

The rotary sealing ring 3 is built with extra hard materials such as WC, SiC, etc., and as shown in Figure 2 on the end face 3a opposite to the stationary sealing ring 6, a dynamic pressure generating groove 3b of appropriate form such as a spiral or the like is formed. By the action of this dynamic pressure generating groove 3b, dynamic pressure is generated as sealing rings 3 or 6 rotate in relation to each other to hold the gap between the sealed end faces 3a, 6a, end faces opposite to both sealing rings 3, 6, in the non-contact condition with a fluid film formed in between. With this fluid film forming section, the gap between the high-pressure side sealing fluid zone H (i.e. high pressure gas region which is inside the machines, such as turbines) and low pressure side sealing fluid zone L (i.e. atmospheric region which is outside the machines, such as turbines) is sealed.

The locating or holding ring 4 which is built with metallic materials such as SUS304, Ti, etc., has an L-shaped cross section with a cylindrical located section 4a and an annular contact section 4b, as shown in Figure 1. This holding ring 4 is held movably in the axial direction and free from radial displacement with the gap between the seal case 1 and the holding ring 4 double sealed by having the "held" section 4a fitted into and held to the inner peripheral section of the retainer 1b via the first O-ring 7 as shown in Figure 2. The holding ring 4 is prevented from rotating in relation to the seal case 1 by allowing a proper number of locking pins 8 set on the ring to latch the retainer 1b of the seal case 1.

Each spring 5 is mounted between the retainer 1b of the seal case 1 and the section 4b of the holding ring 4, as shown in Figures 1 and 2, and urges the holding ring 4 toward the rotary sealing ring 3 in the axial direction.

The stationary sealing ring 6 is built with comparatively soft material such as carbon, etc. and as shown in Figures 1 and 2, is fitted into and held to the guide 1a of the case 1 movably in the axial direction but substantially non-movable radially. That is, the stationary sealing ring 6 is fitted to the guide 1a with dimensional tolerances of a clearance fit level (JIS-BO401, ISO/R 286), and between the outer peripheral surface 6b of the stationary sealing ring 6 and the inner peripheral surface 1c of the guide 1a, an extremely small clearance is formed, which prevents radial displacement of the stationary sealing ring 6 but permits axial movement and fluid passage. This clearance is properly set in accord with the diameter of the stationary sealing ring 6 and sealing conditions, but in general, it is desirable to keep the difference between the outside diameter of the stationary sealing ring 6 and the inside diameter of the guide in the range of about 10-100 µ m.

In addition, the gap between the stationary sealing ring 6 and the holding ring 4 is sealed and kept in the non-contact condition by locating the second 0-ring 9 between opposite end faces 4c and 6c arranged in the axial direction of both rings 4, 6, as shown in Figures 1 and 2. An annular groove 10 is formed in the end face 4c of the pressed section 4b of the holding ring 4 and fitting 0-ring 9 is located in and protrudes from this annular groove 10 and this combined with the bias of the spring 5, presses the stationary sealing ring 6 against the rotary sealing ring 3 under the sealing condition with a suitable clearance 11. The annular groove 10 is a dovetail shape with only the inner peripheral side 10a tapered as shown in Figure 2, preventing the 0-ring 9 becoming detached from the annular groove 10 when the equipment is assembled, when vibration is generated during operation, or when pressure fluctuates. The dovetail groove 10 may have a form with only the outer peripheral side tapered or both inner and outer peripheral sides tapered. The diameter of the annular seal between 0-ring 9 and ring 6 is greater than the diameter of the seal by ring 7.

The stationary sealing ring 6 is prevented from rotating in relation to the holding ring 4 by positioning a suitable number of locking pins 12 set into the section 4b of the holding ring 4 to latch the stationary sealing ring. It is possible to use locking pins 8, 12 in common. That is, the locking pin 8 can be extended and the extended end is allowed to latch the stationary sealing ring 6.

Because in the non-contact type mechanical seal configured as above, the stationary sealing ring 6 does not come in direct contact with the holding ring 4 (they are held squeezed each other via the second 0-ring 9) in the "pressed" section, thermal strain and pressure strain of rings 4 and 6 are absorbed by the second 0-ring 9, elastic material, and do not interfere with each other. That is, the strain distribution of the stationary sealing ring 6 is not affected by strains of the holding ring 4. Moreover, since the stationary sealing ring 6 is fitted and held to the guide 1a of the seal case 1 movably in the axial direction but free from radial displacement, concentricity and parallelism of the stationary side sealing end face 6a in relation to the rotary side sealing end face 3a are not impaired by pressure change, etc. However, because the holding ring 4 is unstably held to the seal case 1 by elastic material (0-ring 7), the holding ring 4 may be deviated in the radial direction due to pressure fluctuation, etc.

However, even in such event, because the holding ring 4 and the stationary sealing ring 6 push each other only in the axial direction via the second 0-ring 9 and are of a relation completely free from relative motion in the radial direction, displacement of the holding ring 4 does not affect the stationary sealing ring 6. Consequently, the smoothness of the stationary sealing end face 6a and the concentricity and parallelism of the face 6a in relation to the rotary side sealing end face 3a are never impaired and even under the high-pressure and high-speed conditions, satisfactory sealing capabilities are exhibited over a long period of time.

Because the holding ring 4 does not come in direct contact with the stationary sealing ring 6 the gap between the two rings 4, 6 is reliably sealed via the second 0-ring 9. Even if deflection of the rotating shaft 2 or trailing of stationary side sealing elements 4, 6 occurs, axial displacement of the stationary side sealing elements 4, 6 accompanying this is absorbed and counteracted by the first 0-ring 7 preventing application of a load to the second 0-ring 9. Consequently, the absorbtion of the holding ring strain is not affected by shaft deflection. The non-contact type mechanical seal related to this invention is not limited by the above embodiments. For example, the radial position at which the second 0-ring 9 is located or the clearance 11 between the two rings 4, 6 can be adjusted according to the shape of the component parts, the fluid pressures or other conditions. In particular, the radial position of the second ring 9 is determined in consideration of the ring 6's function to absorb the holding ring strain and its function to press the rotary sealing ring 3 via the holding ring 4. A means to generate dynamic pressure between the sealing end end faces 3a and 6a is also optional.

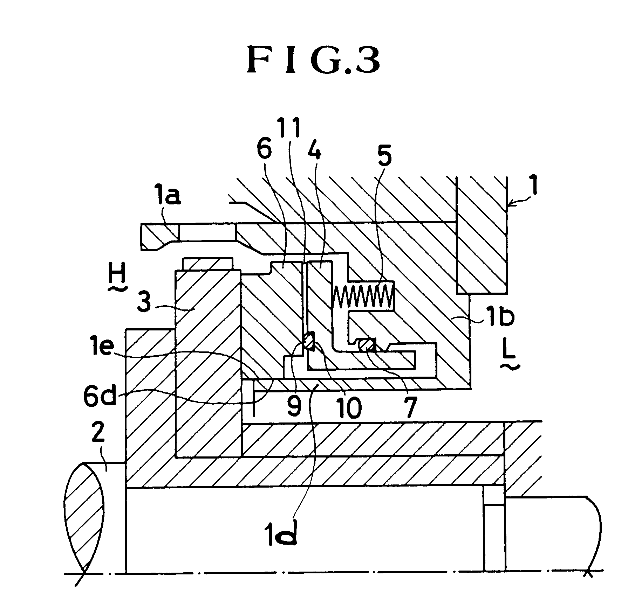

As shown in Figure 3, the stationary sealing ring 6 may be located in the sealing case 1 in such a manner to allow movement in the axial direction but to prevent displacement in the radial direction by forming on the seal case 1 a cylindrical guide section 1d, which extends from retainer section 1b to the inner peripheral section of the stationary sealing ring 6 through the holding ring 4 and fitting the inner peripheral surface 6d of the stationary sealing ring 6 to the outer peripheral surface 1e of this guide section 1d. Even in this event, the stationary sealing ring 6 is fitted to the guide section 1d with the dimensional tolerances (JIS-BO401, ISO/R 286) of about clearance fit, while between the inner peripheral surface 6d of the stationary sealing ring 6 and the outer peripheral surface 1e, an extremely small clearance is designed to prevent radial displacement of the stationary sealing ring but allow axial movement and passage of the fluid. The clearances must be appropriate to the diameter of the stationary sealing ring 6 and sealing conditions; in general, it is desirable to keep the difference between the inside diameter of the stationary sealing ring 6 and the outside diameter of the guide section 1d in the range of 10 - 100 µ m.

## Claims

1. A sealing assembly between a rotary shaft (2) and a surrounding casing (1), such assembly comprising a rotary sealing ring (3) fixed to the shaft (2) and a stationary sealing ring (6) resiliently biassed against the rotary sealing ring (3) by a locating ring (4) and fitted between the casing (1) and the shaft (2) so as to allow axial movement and fluid passage characterised in that the stationary ring (6) and the locating ring (4) are held in spaced sealing relationship by an 0-ring (9) and in that the stationary ring (6) is substantially free of radial displacement.

2. A sealing assembly according to Claim 1 further characterised in that the radially outer surface (6b) of the stationary ring (6) has a sufficiently small clearance with the inner surface (1c) of the seal casing such as effectively to prevent radial displacement but to permit axial movement and fluid passage.

3. A sealing assembly according to Claim 1 wherein an inner peripheral surface (6d) of the stationary ring (6) co-operates with a surface of the seal casing (1) with a sufficiently small clearance to prevent radial displacement but allow axial movement and passage of fluid.

4. A sealing assembly according to either Claim 2 or Claim 3 wherein the small clearance is between 10 and 100 µm.

5. A sealing assembly according to any of the preceding claims wherein the O-ring (9) is seated in a dovetail shaped groove (10) of the locating ring (4) and protrudes to contact the sealing surface of the stationary ring.

## Patentansprüche

1. Dichtungseinrichtung zwischen einer rotierenden Welle (2) und einem diese aufnehmenden Lagergehäuse (1), die einen rotierenden Dichtungsring (3) in fester Zuordnung zu der Welle (2) und einen stationären Dichtungsring (6) in elastisch federnder Vorspannung in Anlage am rotierenden Dichtungsring (3) mittels eines Lokalisierungsrings (4) und derart zwischen Lagergehäuse (1) und Welle (2) gehalten aufweist, daß Axialverschiebungen zwischen Welle und Gehäuse sowie eine Fluidströmung möglich sind, **dadurch gekennzeichnet, daß** der stationäre Dichtungsring (6) und der Lokalisierungsring (4) mittels eines O-Ringes (9) in beabstandeter, aber trotzdem abgedichteter Beziehung zueinander gehalten sind, und daß der stationäre Dichtungsring (6) von wesentlichen radialen Bewegungen freigehalten ist.

2. Dichtungseinrichtung nach Anspruch 1, **gekennzeichnet weiter dadurch, daß** die radial außen liegende Fläche (6b) des stationären Dichtungsringes (6) von der Innenfläche (1c) des Lagergehäuses einen Abstand hat, der so bemessen ist, daß radiale Verstellbewegungen verhindert, axiale Bewegungen und Fluidströmung dagegen möglich sind.

3. Dichtungseinrichtung nach Anspruch 1, bei der eine innere Umfangsfläche (6d) des stationären Dichtungsringes (6) mit einer Fläche des Lagergehäuses (1) unter Einhaltung eines ausreichend klein bemessenen Spaltes zusammenwirkt, sodaß radiale Verstellbewegungen verhindert, axiale Bewegungen und Fluidströmung jedoch möglich sind.

4. Dichtungseinrichtung nach Anspruch 2 oder 3, bei der Abstand bzw. Spaltbreite zwischen 10 und 100 µm liegen

5. Dichtungseinrichtung nach einem der vorstehenden Ansprüche, bei der der O-Ring (9) in einer schwalbenschwanzförmig hinterschnittenen Nut (10) des Lokalisierungsrings (4) gehalten ist und aus dieser Nut soweit vorsteht, daß er die Dichtfläche des stationären Dichtungsrings berührt.

## Revendications

1. Système d'étanchéité entre un arbre rotatif (2) et un carter enveloppant (1), ce système comprenant une bague d'étanchéité rotative (3) fixée à l'arbre (2) et une bague d'étanchéité fixe (6) poussée de manière élastique contre la bague d'étanchéité rotative (3) par une bague de mise en place (4) et logée entre le carter (1) et l'arbre (2) de façon à permettre un mouvement axial et un passage fluide, caractérisé en ce que la bague fixe (6) et la bague de mise en place (4) sont maintenues de manière espacée et étanche par rapport à un joint torique (9) et en ce que la bague fixe (6) est sensiblement exempte de déplacement radial.

2. Système d'étanchéité selon la revendication 1, caractérisé en outre en ce que la surface radialement extérieure (6b) de la bague fixe (6) est suffisamment peu espacée de la surface intérieure (1c) du carter d'étanchéité pour empêcher efficacement un déplacement radial, mais pour permettre un mouvement axial et un passage de fluide.

3. Système d'étanchéité selon la revendication 1, dans lequel une surface périphérique intérieure (6d) de la bague fixe (6) coopère avec une surface du carter d'étanchéité (1) avec un espacement suffisamment faible pour empêcher un déplacement radial mais pour permettre un mouvement axial et un passage de fluide.

4. Système d'étanchéité selon la revendication 2 ou la revendication 3, dans lequel le faible espacement est compris entre 10 et 100 µm.

5. Système d'étanchéité selon l'une quelconque des revendications précédentes, dans lequel le joint torique (9) est logé dans une gorge (10) en queue d'aronde de la bague de mise en place (4) et fait saillie pour venir au contact de la surface d'étanchéité de la bague fixe.
